(19) 

**Europäisches Patentamt**
**European Patent Office**
**Office européen des brevets**

(11)  **EP 4 401 039 A1**

(12)  # EUROPEAN PATENT APPLICATION
published in accordance with Art. 153(4) EPC

(43) Date of publication:
**17.07.2024  Bulletin 2024/29**

(21) Application number: **23843965.7**

(22) Date of filing: **21.06.2023**

(51) International Patent Classification (IPC):
***G06T 11/60*** (2006.01)

(86) International application number:
**PCT/CN2023/101582**

(87) International publication number:
**WO 2024/113779 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022  CN 202211521659**

(71) Applicant: **Huawei Technologies Co., Ltd.
Shenzhen, Guangdong 518129 (CN)**

(72) Inventors:
• **ZHOU, Sai
Shenzhen
Guangdong 518129 (CN)**
• **CHEN, Dapeng
Shenzhen
Guangdong 518129 (CN)**
• **SU, Wanqi
Shenzhen
Guangdong 518129 (CN)**

(74) Representative: **Isarpatent
Patent- und Rechtsanwälte
Barth Hassa Peckmann & Partner mbB
Friedrichstraße 31
80801 München (DE)**

(54)  **IMAGE PROCESSING METHOD AND APPARATUS, AND RELATED DEVICE**

(57)    An image processing method and apparatus, and a related device are provided, and relate to the field of image processing technologies. The method includes: obtaining a first image, where the first image includes a face of a captured object; obtaining a facial feature in a second image, where the facial feature indicates a display status of at least one sub-area of the face of the captured object; and then optimizing a display effect of the face in the first image based on the facial feature in the second image, to obtain a target image. An orientation of a face in the target image is a preset direction, for example, a direction facing a shooting lens. In addition, a display status of at least one sub-area of the face in the target image matches the display status of the at least one sub-area of the face of the captured object. Therefore, an orientation of a face in an image can be adjusted.

EP 4 401 039 A1

An image processing apparatus 202 obtains a first image, where the first image includes a face of a captured object — S301

The image processing apparatus 202 obtains a facial feature in a second image, where the facial feature indicates a display status of at least one sub-area of the face of the captured object — S302

The image processing apparatus 202 optimizes a display effect of the face in the first image based on the facial feature in the second image, to obtain a target image, where an orientation of a face in the target image is a preset direction, and a display status of at least one sub-area of the face in the target image matches the display status of the at least one sub-area of the face of the captured object — S303

FIG. 3

## Description

This application claims priority to Chinese Patent Application No. 202211521659.2, filed with the China National Intellectual Property Administration on November 30, 2022 and entitled "IMAGE PROCESSING METHOD AND APPARATUS, AND RELATED DEVICE", which is incorporated herein by reference in its entirety.

## TECHNICAL FIELD

This application relates to the field of image processing technologies, and in particular, to an image processing method and apparatus, and a related device.

## BACKGROUND

Image processing (image processing) is a technology of processing an image, for example, analyzing or processing an image, to enable the image to satisfy a visual requirement or another requirement. The image processing is widely used in scenarios such as a video conference, image compositing, and face recognition. The video conference scenario is used as an example. Because a quantity of participants is large and a camera is usually not disposed in front of a face of a participant, an orientation of a face presented in a video image is not a forward direction (that is, an orientation facing the camera). Because face information of a peer party cannot be accurately learned, a conference effect of face-to-face communication cannot be achieved by the participants in the conference.

Therefore, how to provide an image processing solution with better experience becomes an urgent technical problem to be resolved.

## SUMMARY

This application provides an image processing method, to adjust an orientation of a face in an image, and improve a restoration effect of the face whose orientation has been adjusted. In addition, this application further provides a corresponding apparatus, a computing device, a computing device cluster, a computer-readable storage medium, and a computer program product.

According to a first aspect, this application provides an image processing method. Specifically, a first image is obtained, where the first image includes a face whose orientation is to be adjusted, and a facial feature in a second image is obtained. The facial feature indicates a display status of at least one sub-area of a face of a captured object, for example, indicates that an eye area of the face is in an "eye-open" or "eye-closed" state, or indicates that a mouth area of the face is in a "mouth-open", "mouth-closed", or "tongue-protruded" state. The face in the first image and the face in the second image may belong to a same object, or may belong to different objects. Then, a display effect of the face in the first image is optimized based on the facial feature in the second image, to obtain a target image. An orientation of a face in the target image is a preset direction, for example, a direction facing a shooting lens. In addition, a display status of at least one sub-area of the face in the target image matches the display status of the at least one sub-area of the face of the captured object.

In this way, in the generated target image, the orientation of the face can be optimized to the preset direction. Therefore, an orientation of a face in an image can be adjusted. In a video conference scenario, a conference effect of face-to-face communication can be brought to a participant by adjusting an orientation of a face of a user in an image. In addition, the display effect of the face in the first image is optimized based on the display status of the sub-area (for example, an area such as an eye or a mouth) of the face of the captured object in the second image, so that a feature of each sub-area of the face in the finally generated target image is consistent with an actual feature of the face in the second image as much as possible. In this way, a restoration effect of the face in the target image can be great.

In a possible implementation, the facial feature extracted from the second image specifically includes a facial status feature. The facial status feature indicates the display status of the at least one sub-area of the face of the captured object. In addition, the facial feature further includes a facial expression feature or a facial posture feature. The facial expression feature indicates an expression of the face of the captured object. The facial posture feature indicates a posture of the face of the captured object. In this case, when the display effect of the face in the first image is optimized based on the facial feature, specifically, an orientation of the face in the first image may be first adjusted based on the facial expression feature or the facial posture feature, to obtain a third image. An orientation of a face in the third image is the preset direction, for example, the direction facing the shooting lens. In addition, an expression of the face in the third image matches the expression of the face of the captured object, or a posture of the face in the third image matches the posture of the face of the captured object. Then, a display effect of the face in the third image is optimized based on the facial status information, to obtain the target image. In this way, in the generated target image, not only the orientation of the face can be optimized to the preset direction, but also the feature of each sub-area of the face in the generated target image is consistent with the actual feature of the face in the second image as much as possible, so that the restoration effect of the face in the target image can be great.

In a possible implementation, before the display effect of the face in the third image is optimized based on the facial status feature, an appearance feature may further be obtained first. The appearance feature indicates an appearance of the at least one sub-area of the face whose orientation is to be adjusted and that is in the first image, so that the display effect of the face in the third image is optimized based on the appearance feature and the facial status feature in the second image. In this way, the appearance feature in the first image and the facial status feature in the second image are used, so that the restoration effect of the face in the image can be improved after the orientation of the face in the image is adjusted.

In a possible implementation, when the display effect of the face in the third image is optimized based on the appearance feature and the facial status feature, specifically, an encoding vector corresponding to the appearance feature and an encoding vector corresponding to the facial status feature may be first spliced, to obtain a fusion encoding vector; then a convolution operation is performed on the fusion encoding vector, to obtain a local area encoding vector; and an encoding vector corresponding to at least one sub-area of a face area in the third image is replaced with the local area encoding vector, to obtain an intermediate image, so that the target image can be obtained by decoding the intermediate image. In this way, the appearance of the sub-area of the face in the first image and the display status of the sub-area of the face in the second image may be combined in a vector splicing manner, to optimize the display effect of the face in the third image based on information obtained through combination.

In a possible implementation, when the orientation of the face in the first image is adjusted based on the facial expression feature or the facial posture feature, specifically, a motion field of a pixel in a face area in the first image may be first obtained through calculation based on the facial expression feature or the facial posture feature of the face in the second image, to adjust the orientation of the face in the first image based on the motion field of the pixel in the face area. In this way, the orientation of the face in the first image can be adjusted.

In a possible implementation, in a process of adjusting the orientation of the face in the first image, a motion field of a target pixel that is in the first image and that corresponds to a pixel in an area outside the face in the third image may further be first obtained through calculation based on the facial posture feature. The area outside the face is an image area between a background area and the face area in the third image. Therefore, when the orientation of the face in the first image is adjusted based on the facial expression feature or the facial posture feature, specifically, an orientation of an area outside the face in the first image may be adjusted based on the motion field of the target pixel in the first image, the target expression feature, and the facial posture feature. In this way, in the generated target image, a restoration effect of the area outside the face can also be great.

In a possible implementation, before the orientation of the face in the first image is adjusted, an adjustment parameter for a posture of a face in the second image may further be obtained in response to a configuration operation of a user for a facial posture. Therefore, when the orientation of the face in the first image is adjusted, specifically, the orientation of the face in the first image may be adjusted based on the adjustment parameter, the facial expression feature, and the facial posture feature. In this way, the user may define a posture of the face in the generated target image. Therefore, flexibility of the posture of the face in the target image can be improved, so that user experience can be improved.

In a possible implementation, after the target image is generated, the target image may further be presented. Therefore, the user can view an image of the face whose orientation has been adjusted, so that the conference effect of face-to-face communication can be brought to the participant in the video conference scenario. Alternatively, after the target image is generated, face recognition may further be performed on the target image, to determine an object to which the face in the target image belongs. In this way, after the orientation of the face is adjusted and a local area of the face is optimized, face recognition precision can be improved.

According to a second aspect, this application provides an image processing apparatus. The image processing apparatus includes modules configured to perform the image processing method in any one of the first aspect or the possible implementations of the first aspect.

According to a third aspect, this application provides a computing device. The computing device includes a processor and a memory. The processor is configured to execute instructions stored in the memory, to enable the computing device to perform operation steps of the image processing method in any one of the first aspect or the implementations of the first aspect. It should be noted that the memory may be integrated into the processor, or may be independent of the processor. The computing device may further include a bus. The processor is connected to the memory by using the bus. The memory may include a readable memory and a random access memory.

According to a fourth aspect, this application provides a computing device cluster. The computing device cluster includes at least one computing device, and the at least one computing device includes a processor and a power supply circuit. The power supply circuit is configured to supply power to the processor, and the processor is configured to execute instructions, to enable the computing device cluster to perform operation steps of the image processing method in any one of the first aspect or the implementations of the first aspect.

According to a fifth aspect, this application provides a computer-readable storage medium. The computer-readable storage medium stores instructions, and when the instructions are run on a computing device, the computing device is enabled to perform operation steps of the image processing method in any one of the first aspect or the implementations of the first aspect.

According to a sixth aspect, this application provides a computer program product including instructions. When the computer program product runs on a computing device, the computing device is enabled to perform operation steps of the image processing method in any one of the first aspect or the implementations of the first aspect.

Based on the implementations provided in the foregoing aspects, this application may provide more implementations through further combination.

## BRIEF DESCRIPTION OF DRAWINGS

FIG. 1a is a schematic diagram of an example application scenario according to this application;
FIG. 1b is a schematic diagram of another example application scenario according to this application;
FIG. 1c is a schematic diagram of still another example application scenario according to this application;
FIG. 2 is a schematic diagram of a face in an image before and after an orientation of the face is adjusted;
FIG. 3 is a schematic flowchart of an image processing method according to this application;
FIG. 4 is a schematic flowchart of another image processing method according to this application;
FIG. 5 is a schematic diagram of an example configuration interface according to this application;
FIG. 6 is a schematic diagram of a structure of an image processing apparatus according to this application;
FIG. 7 is a schematic diagram of a hardware structure of a computing device according to this application; and
FIG. 8 is a schematic diagram of a hardware structure of a computing device cluster according to this application.

## DESCRIPTION OF EMBODIMENTS

To improve experience of a participant in a video conference, this application provides an image processing method. A display effect of a face in an image 1 is optimized based on a facial feature in an image 2, so that an orientation of the face in the image 1 is adjusted, and a restoration effect of the face whose orientation has been adjusted is great.

The following describes technical solutions in this application with reference to the accompanying drawings in embodiments of this application.

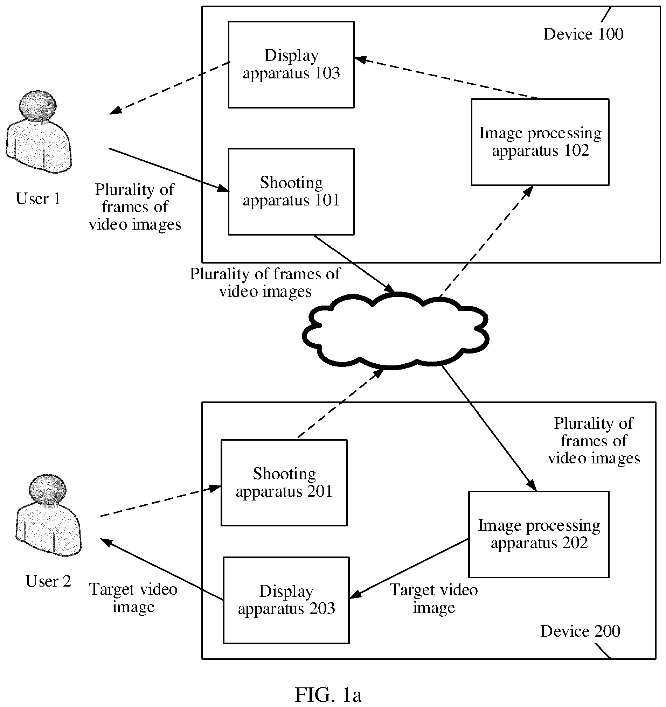

FIG. 1a is a schematic diagram of an example application scenario according to an embodiment of this application. In the application scenario shown in FIG. 1a, a device 100 and a device 200 are included. In addition, the device 100 and the device 200 may communicate with each other by using a wired network or a wireless network. During actual application, the device 100 and the device 200 each may be specifically a user terminal, such as a smartphone, an iPad, or a notebook computer.

The device 100 includes a shooting apparatus 101 (such as a camera lens), an image processing apparatus 102, and a display apparatus 103 (such as a display screen). The device 200 includes a shooting apparatus 201, an image processing apparatus 202, and a display apparatus 203. In this way, a user 1 and a user 2 can have a video conversation, for example, a video conference, by using the device 100 and the device 200.

For example, an image of a face of the user 1 is presented on the device 200. In a video conversation process, the device 100 may shoot the user 1 by using the shooting apparatus 101, to obtain a plurality of frames of video images including the face of the user 1, and the device 100 sequentially sends the plurality of frames of video images to the device 200, so that the device 200 presents the plurality of frames of video images of the face of the user 1 to the user 2.

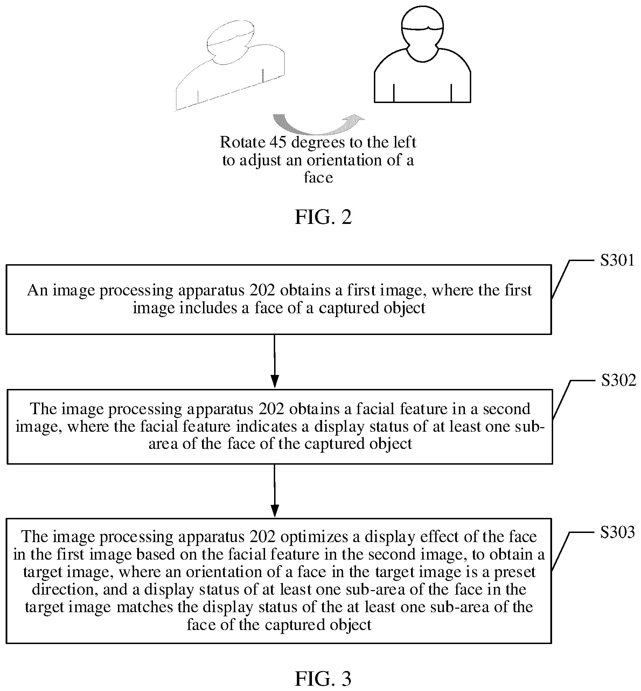

Because an orientation of the face of the user 1 usually does not face a shooting lens of the shooting apparatus 101, imaging of the face of the user 1 in the plurality of frames of video images is not at a front direction. For example, as shown on a left side of FIG. 2, the video image shot by the shooting apparatus 101 for the user 1 may include an image of a side face of the user 1, in other words, the face of the user 1 does not face the shooting lens of the shooting apparatus 101. As a result, in a process of having the video conference with the user 1, the user 2 has difficulty in accurately learning face information of the user 1. Consequently, a conference communication effect between the user 2 and the user 1 is poor.

Therefore, in an image processing solution provided in this application, an image processing apparatus 202 optimizes, based on a facial feature of the user 1, a display effect of the face that is of the user 1 and that is included in the video image, so that the orientation of the face of the user 1 in the image is adjusted to a direction facing the shooting lens, and a restoration effect of the face whose orientation has been adjusted can be improved. During specific implementation, the image processing apparatus 202 may use a first frame of video image as a video image 1, and use a second frame or any frame of video image after the second frame as a video image 2. Then, the image processing apparatus 202 extracts a facial feature in the video image 2. The facial feature indicates a status of at least one sub-area of the face that is of the user 1 and that is in the video image 2, for example, an "eye-open" state or an "eye-closed" state of an eye area of the face of the user 1, or a "mouth-open" state, a "mouth-open and tongue-protruded" state, or a "mouth-closed" state of a mouth area. Then, the image processing apparatus 202 optimizes a display effect of a face in the video image 1 based on the facial feature in the video image 2, to obtain a target video image. The target video image may be presented to the user 2 by using the display apparatus 203, so that the user 2 views a user face image that has been turned to the front.

In this way, in the target video image, the orientation of the face of the user 1 can be optimized to a preset direction (for example, the direction facing the shooting lens). For example, for the video image shown on the left side of FIG. 2, after the image processing apparatus 202 adjusts the orientation of the face of the user 1 in the image, a generated new video image may be shown on the right side of FIG. 2, and a front face of the user 1 can be displayed, so that a face-to-face conference effect can be achieved when the user 2 and the user 1 have the video conference.

In addition, if only the orientation of the face of the user 1 in the video image 1 is adjusted, in a process of adjusting the orientation of the face of the user 1 and restoring the complete face of the user 1, a case in which the restored face deviates greatly from the actual face of the user 1 easily occurs. For example, eyebrows in the actual face of the user 1 are in an "eyebrow-picked" state (for example, a height of a left eyebrow is low, and a height of a right eyebrow is high), but heights of eyebrows in the face that has been turned to the front may be the same, that is, an "eyebrow-picked" expression of the user 1 is lost. Alternatively, a mouth action in the actual face of the user 1 is "tongue-protruded", but a mouth in the face that has been turned to the front may be only in an open state, and a "tongue-protruded" expression of the user 1 is not reflected. Therefore, the image processing apparatus 202 optimizes the display effect of the face in the video image 1 by using a display status of the sub-area (for example, an area such as the eye or the mouth) of the face of the user 1, so that a feature that is related to the eye, the mouth, or the like of the face of the user 1 and that is in the target video image finally presented to the user 2 is consistent with an actual feature of the face of the user 1 as much as possible. In this way, a restoration effect of the face of the user 1 in the target video image can be great.

Similarly, the shooting apparatus 201 in the device 200 may also shoot the user 2, to obtain a plurality of frames of video images including a face of the user 2, and then the device 200 sequentially sends the plurality of frames of video images to the device 100. The image processing apparatus 102 in the device 100 may optimize, in a manner similar to the foregoing manner, orientations of the faces of the user 2 in the plurality of frames of video images and a display status of each area of the face, and present a generated new video image to the user 1 by using the display apparatus 103, to create, for the user 1, a video conversation effect of face-to-face communication with the user 2.

It should be noted that the foregoing process in which the image processing apparatus 202 generates the target video image is merely used as an implementation example. In another possible implementation, after the image processing apparatus 202 obtains the video image 1, the device 100 may alternatively transmit facial features in one or more frames of video images to the device 200, and may not transmit a complete video image to the device 200. In this way, consumption of communication resources between the device 100 and the device 200 can be reduced, and a requirement on a bandwidth between the device 100 and the device 200 for generating the target video image can be reduced.

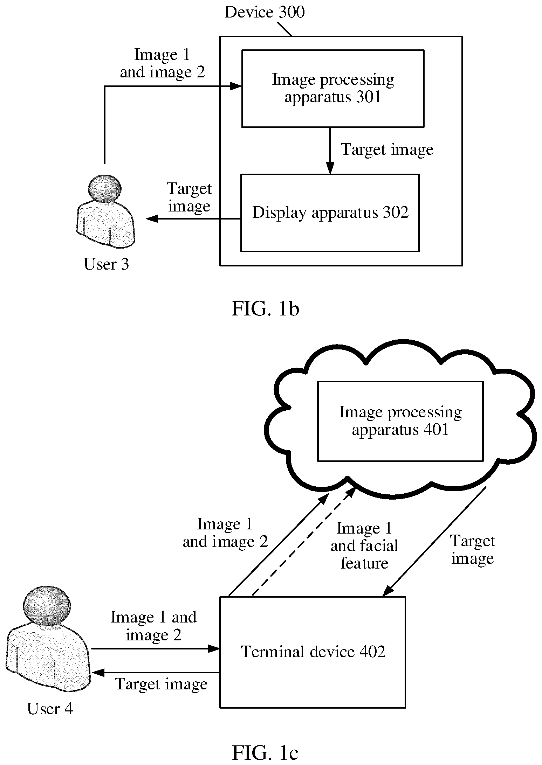

In addition, the application scenario shown in FIG. 1a is merely used as an implementation example, and the foregoing image processing method is also applicable to another possible application scenario. For example, in an application scenario shown in FIG. 1b, a device 300 includes an image processing apparatus 301 and a display apparatus 302. In addition, the device 300 may provide a local image compositing service for a user 3. During specific implementation, the user 3 may import an image 1 and an image 2 to the device 300. In addition, the image 1 includes a face whose orientation is to be adjusted, and the image 2 includes a facial feature for the captured object. Therefore, the image processing apparatus 301 optimizes a display effect of the face in the image 1 based on the facial feature in the image 2, to obtain a target image, and presents the target image on the device 300 by using the display apparatus 302, so that the user 3 views the new image obtained through compositing based on the image 1 and the image 2.

Alternatively, in another implementable application scenario, as shown in FIG. 1c, an image processing apparatus 401 may be deployed on a cloud, and is configured to provide a cloud service of image processing. In this case, a user 4 may request, by using a local terminal device 402, the image processing apparatus 401 on the cloud to provide the corresponding cloud service of image processing, or the like. During specific implementation, the user 4 may import an image 1 and an image 2 to the terminal device 402, so that the terminal device 402 sends the image 1 and the image 2 to the image processing apparatus 401 on the cloud. The image 1 includes a face whose orientation is to be adjusted, and the image 2 includes a facial feature of the captured object. In this way, the image processing apparatus 401 generates a new target image based on the image 1 and the image 2 in the foregoing manner. Alternatively, the terminal device 402 may extract the facial feature from the image 2, and send the image 1 and the facial feature to the image processing apparatus 401, so that the image processing apparatus 401 generates a new target image based on the facial feature and the image 1. Finally, the image processing apparatus 401 feeds back the target image to the terminal device 402, so that the terminal device 402 can present the target image to the user 4. The image processing apparatus may serve as an independent physical device to provide the user with the cloud service of image processing. Alternatively, the image processing apparatus 401 may be deployed in a cloud computing device, and control the computing device to implement an image processing function. This is not limited in this embodiment.

For example, the foregoing image processing apparatuses (including the image processing apparatus 102, the image processing apparatus 202, the image processing apparatus 301, and the image processing apparatus 401) may be implemented by using software, for example, may be implemented by using at least one of a virtual machine, a container, or a computing engine. In this case, the image processing apparatus may run on a physical device, for example, run on the device 100, the device 200, or the device 300. Alternatively, the foregoing image processing apparatuses may be implemented by using a physical device including a processor. The processor may be a CPU, any processor such as an application-specific integrated circuit (application-specific integrated circuit, ASIC), a programmable logic device (programmable logic device, PLD), a complex programmable logic device (complex programmable logic device, CPLD), a field programmable gate array (field programmable gate array, FPGA), a generic array logic (generic array logic, GAL), a system on chip (system on chip, SoC), a software-defined infrastructure (software-defined infrastructure, SDI) chip, an artificial intelligence (artificial intelligence, AI) chip, or a data processing unit (Data processing unit, DPU), or any combination thereof. In addition, the image processing apparatus may include one or more processors, and may include one or more types of processors. Specifically, a quantity and types of processors may be set based on a service requirement of an actual application. This is not limited in this embodiment.

For ease of understanding, the following describes embodiments of the image processing method provided in this application with reference to the accompanying drawings.

FIG. 3 is a schematic flowchart of an image processing method according to an embodiment of this application. The method may be applied to the application scenario shown in FIG. 1a or FIG. 1b, or may be applied to another applicable application scenario. For ease of description, in this embodiment, an example in which a hardware object is specifically the image processing apparatus 202 in FIG. 1a is used for description.

The image processing method shown in FIG. 3 may be performed by the image processing apparatus 202 in FIG. 1a, and the method may specifically include the following steps.

S301: The image processing apparatus 202 obtains a first image, where the first image includes a face of a captured object.

The face of the captured object in the first image may be specifically a face of a human, for example, the face of the user 1 in FIG. 1a. Alternatively, the face in the first image may be an exterior of another object, for example, may be a face of an animal or an exterior of a cartoon character.

In this embodiment, the following several implementation examples of obtaining the first image are provided.

In a first implementation example, the device 100 may shoot the user 1 by using the shooting apparatus 101, to obtain a video stream, and send the video stream to the device 200 in a wired or wireless manner. After obtaining the video stream, the image processing apparatus 202 in the device 200 may use a first frame of video image (or any frame of video image) in the video stream as the first image. The first image includes the face of the user 1, in other words, a part of image content in the first image is the face of the user 1.

Further, in a video conference scenario shown in FIG. 1a, the first image determined by the image processing apparatus 202 may be dynamically updated. In an example, in a video conference process, a latest frame of video image in the video stream received by the image processing apparatus 202 is greatly different from the first frame of video image. For example, when the user 1 performs an action that causes a change of a face status, for example, wearing a headset, a face (wearing the headset) in the latest frame of video image is greatly different from a face (without the headset) in the first frame of video image. Alternatively, when light brightness of an environment in which the user 1 is located changes, for example, the light brightness decreases, brightness of a person background in the latest frame of video image is greatly different from brightness of a person background in the first frame of video image. Therefore, when detecting that the latest frame of video image in the video stream is greatly different from the first frame of video image, the image processing apparatus 202 may determine the latest frame of video image as the first image that participates in an image processing process.

In a second implementation example, the image processing apparatus 202 may determine the first image based on an operation performed by the user 2 on the device 200. Specifically, the device 200 may present a plurality of images to the user 2 by using the display apparatus 203. Each of the plurality of images may include the face of the user 1, or may be a face of another object. In addition, the user 2 may perform selection on the plurality of images, so that the image processing apparatus 202 may determine, as the first image, an image selected by the user 2. Alternatively, the user 2 may import an image to the device 200, so that the image processing apparatus 200 may determine, as the first image, the image imported by the user 2.

The foregoing implementations are merely used as examples for description. In another embodiment, the image processing apparatus 202 may alternatively obtain the first image in another manner.

S302: The image processing apparatus 202 obtains a facial feature in a second image, where the facial feature indicates a display status of at least one sub-area of the face of the captured object.

A face in the second image and the face in the first image may belong to a same object, for example, both are the face of the user 1. Alternatively, the face in the second image and the face in the first image may belong to faces of different objects. For example, the first image is an image of a face of a user a, and the second image is an image of a face of a user b. This is not limited in this embodiment.

The sub-area of the face may be, for example, one or more of areas such as a left eyebrow, a right eyebrow, a left eye, a right eye, a nose, a mouth, a forehead, a left cheek, and a right cheek of the face, or may be a sub-area defined in another manner. Correspondingly, the display status of the sub-area can represent a status of a corresponding location of the face. For example, a display status corresponding to a left/right eyebrow area of the face may be a state such as "standard", "frowning", or "eyebrow-picked"; a display status corresponding to a left/right eye area of the face may be a state such as "viewing horizontally", "squinting", "eye-open", or "eye-closed"; a display status corresponding to a nose area of the face may be a state such as "standard", or "nose-wrinkled"; a display state corresponding to a mouth area of the face may be a state such as "mouth-open", "tongue-protruded", "pouting", "lip-compressed", or "mouth-closed"; a display state corresponding to a forehead area of the face may be a state such as "smooth" or "wrinkling"; and a display state corresponding to a cheek area of the face may be a state such as "standard" or "dimpling".

Because the display status of the sub-area of the face that is of the captured object and that is in the second image reflects an actual feature of the face of the captured object, the image processing apparatus 202 obtains the facial feature that indicates the display status of the sub-area of the face of the captured object and that is in the second image, to subsequently adjust an orientation of the face in the first image based on the facial feature and restore a complete face.

In a possible implementation, the image processing apparatus 202 identifies the at least one sub-area of the face in the second image by using an AI model. During specific implementation, the image processing apparatus 202 may input the second image into a key point detection model. The key point detection model performs inference on the second image, and outputs locations of a plurality of key points in the second image. The key points are key points such as the eyebrow, the eye, the nose, the mouth, the forehead, and the cheek of the face, so that locations of one or more sub-areas in the second image can be obtained. The key point detection model may be constructed based on a convolutional neural network (convolutional neural network, CNN) or another neural network, and is trained based on at least one group of training samples. The training sample may include, for example, a sample image of the face and a label that indicates each key point that is of the face and that is included in the sample image.

Then, the image processing apparatus 202 may capture an image of the one or more corresponding sub-areas from the second image based on the location that is of the key point and that is output by the key point detection model, and input the captured image of the at least one sub-area into a state encoder. The state encoder outputs a display status corresponding to each sub-area. The state encoder is configured to encode an image, and output a vector that represents a state corresponding to the image. In this way, the facial feature in the second image can be obtained.

It should be noted that the foregoing implementation in which the image processing apparatus 202 determines the sub-area in the second image and obtains a facial status feature is merely used as an implementation example, and is not used to limit a specific implementation process thereof. For example, in the application scenario shown in FIG. 1a, the device 100 may extract the facial feature from the second image, and send the facial feature in the second image to the image processing apparatus 202, so that the image processing apparatus 202 may not perform an operation of extracting the facial feature from the second image.

Further, the facial feature extracted by the image processing apparatus 202 may further indicate an expression of the face of the captured object, or may further indicate a posture of the face of the captured object, or indicate both the expression of the face of the captured object and the posture of the face of the captured object. For ease of differentiation and description, the following uses an example in which the extracted facial feature includes a facial status feature, a facial expression feature, and a facial posture feature for description. The facial status feature indicates the display status of the at least one sub-area of the face of the captured object. The facial expression feature indicates the expression of the face of the captured object. The facial posture feature indicates the posture of the face of the captured object. In this embodiment, the following two example implementations of extracting the facial posture feature and the facial expression feature from the second image are provided.

In a first possible implementation, the image processing apparatus 202 may obtain the video stream sent by the device 100. After using the first frame of video image in the video stream as the first image, the image processing apparatus 202 may use a second frame of video image (or another subsequent frame of video image) as the second image, and extract, from the second image, an expression and/or a posture of the face of the user 1. For example, the image processing apparatus 202 may identify a face area in the second image, and extract, for the face area, a feature that indicates the expression and/or the posture of the face of the user 1. Alternatively, when extracting the facial posture feature, the image processing apparatus 202 may identify an area above a shoulder (or another location) in the second image, to comprehensively determine the posture of the face of the user 1 based on image areas of parts including the shoulder, a head, and the like.

The extracted facial expression feature may indicate the expression of the face of the user 1, for example, an expression such as crying, smiling, or laughing. The extracted facial posture feature may indicate the posture of the face of the user 1, for example, a posture such as head up, head down, head to the left, or head to the right. For a specific implementation of extracting, from the image, the expression and the posture of the face, a related application already exists in an actual application scenario, and details are not described herein.

For example, the image processing apparatus 202 may extract the expression and/or the posture of the face by using an AI model. During specific implementation, the image processing apparatus 202 may input the second image into a three-dimensional morphable model (3D morphable model, 3DMM), and the 3DMM model outputs the facial posture feature and/or the facial expression feature included in the second image. For example, the facial posture feature output by the 3DMM model based on the second image may include a rotation angle $R_2$ and a translation offset $t_2$. The output facial expression feature may be an expression parameter $\beta_2$. Further, the 3DMM model may further output an identity parameter $\alpha_2$. The identity parameter $\alpha_2$ may serve as identity information of the user 1 to which the face in the second image belongs.

In a second possible implementation, after the device 100 shoots the face of the user 1 by using the shooting apparatus 101 and generates the video stream, for one frame of video image in the video stream, the device 100 may extract the facial expression feature and/or the facial posture feature from the frame of video image, and send the facial expression feature and/or the facial posture feature to the device 200, so that the image processing apparatus 202 in the device 200 obtains the facial expression feature and/or the facial posture feature. In this way, during data interaction between the device 100 and the device 200, the video image may not need to be transmitted, and only the facial expression feature and/or the facial posture feature with a small data amount may be transmitted. Therefore, not only network resources required for image processing can be reduced, but also a requirement on a network bandwidth when the device 100 and the device 200 have the video conference can be lowered.

S303: The image processing apparatus 202 optimizes a display effect of the face in the first image based on the facial feature in the second image, to obtain a target image, where an orientation of a face in the target image is a preset direction, and a display status of at least one sub-area of the face in the target image matches the display status of the at least one sub-area of the face of the captured object.

During specific implementation, for example, the facial feature includes the facial status feature, the facial expression feature, and the facial posture feature. When optimizing the display effect of the face in the first image, specifically, the image processing apparatus 202 may first adjust the orientation of the face in the first image based on the facial expression feature and the facial posture feature, to obtain a third image. An orientation of a face in the third image is the preset direction. In this way, not only the orientation of the face in the obtained third image is the preset direction, but also an expression and/or a posture of the face in the third image is the expression and/or the posture in the second image, so that the expression and/or the posture of the face is migrated from the second image to the third image. Then, the image processing apparatus 202 optimizes a display effect of the face in the third image based on the facial status feature, to obtain the target image.

The preset direction may be, for example, a front direction, to be specific, an orientation of a face when the face faces the lens of the shooting apparatus. Alternatively, the preset direction may be another set direction, to be specific, a direction that has an angle deviation from the forward direction, for example, a direction that is five degrees deviating to the left from the front direction or a direction that is 10 degrees deviating to the right from the front direction. This is not limited in this embodiment. During actual application, the image processing apparatus 202 may externally provide a configuration interface for the orientation of the face, so that a user may set the preset direction on the configuration interface, that is, set a direction of the adjusted orientation of the face. In this way, flexibility of adjusting the orientation of the face in the image can be improved, and user experience is improved.

In this embodiment, the following specific implementation example of adjusting the orientation of the face in the first image is provided.

In a first implementation example, the image processing apparatus 202 may first reconstruct, based on the facial expression feature and/or the facial posture feature that are obtained and that correspond to the second image, a three-dimensional mesh (3D mesh) corresponding to the to-be-generated third image. The three-dimensional mesh is a data structure that is for establishing models for various irregular objects in computer graphics. In other words, an outer surface of a three-dimensional object may be depicted by using a large quantity of polygons (such as triangles and quadrilaterals) with small areas. A triangular mesh in a three-dimensional network is used as an example. The triangular mesh is a triangular list. In addition, any curved surface in the real world may be formed by using a large quantity of small-sized triangular facets, to simulate outer surfaces of various objects in the real world by using these small triangular facets.

During specific implementation, when extracting the facial posture feature $(R_2, t_2)$, the facial expression feature $\beta_2$, and the identity parameter $\alpha_2$ from the second image by using the 3DMM model, the image processing apparatus 202 may further input the first image into the 3DMM model, to obtain the facial posture feature $(R_1, t_1)$, the facial expression feature $\beta_1$, and the identity parameter $\alpha_1$ that correspond to the first image and that are output by the 3DMM model. Then, because the orientation of the face in the second image is not the preset direction, the image processing apparatus 202 may adjust a rotation angle $R_2$ in the facial posture feature corresponding to the second image to a preset rotation angle $R'_2$, where an orientation that is of the face and that corresponds to the rotation angle $R'_2$ is the preset direction.

Then, the image processing apparatus 202 may reconstruct, based on the rotation angle $R'_2$, a translation offset $t_2$, the identity parameter $\alpha_1$ corresponding to the first image, and the facial expression feature $\beta_1$, a three-dimensional mesh $M_2$ corresponding to the third image.

Then, the image processing apparatus 202 may determine, based on the three-dimensional mesh $M_2$, a pixel that belongs to a face area in the to-be-generated third image and a pixel that corresponds to the pixel belonging to the face area and that is in the first image, and establish a mapping relationship between the pixels in the two images, to calculate, based on changes of pixel locations of the mapped pixels in the first image and the third image, a motion field corresponding to each pixel in the face area in the first image, so as to adjust the orientation of the face in the first image based on the motion field of each pixel in the face area, and generate the third image. The motion field is a two-dimensional vector field in which a pixel in an image is shifted. To be specific, each pixel in the image corresponds to a spatial point, and a three-dimensional vector generated when each spatial point moves in space is projected to a two-dimensional vector on an image plane, so that the two-dimensional vector of each pixel in the image may form the motion field. The following describes in detail an implementation process.

During specific implementation, when reconstructing the three-dimensional mesh $M_2$ corresponding to the third image, the image processing apparatus 202 may further reconstruct, based on the facial posture feature $(R_1, t_1)$, the facial expression feature $\beta_1$, and the identity parameter $\alpha_1$ that correspond to the first image, a three-dimensional mesh $M_1$ corresponding to the first image.

Usually, there is a mapping relationship between a point in an area of each polygon in the three-dimensional mesh and coordinates of a point on the image plane. For example, the polygon in the three-dimensional mesh is a triangle. A mapping relationship shown in the following formula (1) may exist between a point in an area of each triangle in the three-dimensional mesh and coordinates of a point in the image.

$$\Pi: \ (x, y, z)^T \rightarrow \left( f * \frac{x}{z} + c_x, f * \frac{y}{z} + c_y \right)^T \ \text{Formula (1)}$$

$(x, y, z)^T$ is a point in the three-dimensional mesh. x, y, and z are coordinate values of the point in three dimensions. $\left( f * \frac{x}{z} + c_x, f * \frac{y}{z} + c_y \right)^T$ is a coordinate value of a point that is obtained by mapping the point to the image plane. T represents matrix transpose. f is a focal length, for example, may be a focal length of the lens that shoots the image. $c_x$, $c_y$ respectively represent offsets of a coordinate origin of a pixel in the image relative to an origin of a coordinate system of the image in two directions x and y.

In addition, as shown in the following formula (2), one-to-one correspondence may be established between each pixel in the face area in the to-be-generated third image and the three-dimensional mesh $M_2$ by using a Z-buffer algorithm (Z-buffer).

$$p_t \rightarrow \{v_1(p_t), v_2(p_t), v_3(p_t)\} \ \text{Formula (2)}$$

$p_t$ is a pixel in the face area in the to-be-generated third image.
$\{v_1(p_t), v_2(p_t), v_3(p_t)\}$ is a triangle that is in the three-dimensional mesh $M_2$ and to which the pixel $p_t$ is mapped. $v_1(p_t)$, $v_2(p_t)$, $v_3(p_t)$ are vectors respectively corresponding to three sides of the triangle. An area other than the face area in the third image is referred to as a background area in this embodiment.

In addition, because a quantity and structures of triangles included in the three-dimensional mesh $M_2$ corresponding to the third image and a quantity and structures of triangles included in the three-dimensional mesh $M_1$ corresponding to the first image are fixed and correspond to each other, a correspondence shown in the following formula (3) usually exists between a triangle in the three-dimensional mesh $M_2$ and a triangle in the three-dimensional mesh $M_1$.

$$\{v_1(p_t), v_2(p_t), v_3(p_t)\} \rightarrow \{v'_1(p_t), v'_2(p_t), v'_3(p_t)\} \ \text{Formula (3)}$$

$\{v_1'(p_t), v_2'(p_t), v_3'(p_t)\}$ is a triangle that is in the three-dimensional mesh M$_1$ and that corresponds to a triangle $\{v_1(p_t), v_2(p_t), v_3(p_t)\}$ in the three-dimensional mesh M$_2$. $v_1'(p_t), v_2'(p_t), v_3'(p_t)$ are vectors respectively corresponding to three sides of the triangle.

Then, the image processing apparatus 202 may map the triangle in the three-dimensional mesh M$_1$ to an image plane ($\Pi(c'(p_t))$) by using coordinates. c'(p$_t$) is a pixel obtained by mapping the triangle $\{v_1'(p_t), v_2'(p_t), v_3'(p_t)\}$ in the three-dimensional mesh M$_1$ to the image plane, that is, a pixel obtained by mapping the triangle to the first image. For example, the image processing apparatus 202 may map a central point or another location of the triangle in the three-dimensional mesh M$_1$ to a pixel on the image plane.

In this way, based on the foregoing formula (1) to formula (3), the image processing apparatus 202 may establish, by using the three-dimensional mesh M$_2$ and the three-dimensional mesh M$_1$, a correspondence between the pixel p$_t$ in the face area in the to-be-generated third image and the pixel c'(p$_t$) obtained through mapping in the image plane. Therefore, the image processing apparatus 202 may obtain, through calculation based on coordinates of the pixel p$_t$ in the third image and the pixel c'(p$_t$) in the first image, a motion change between the pixel c'(p$_t$) in the first image and the pixel p$_t$ in the face area in the third image, that is, a motion field T$_{in}$ of the pixel c'(p$_t$) in the first image is obtained, so that the motion field of each pixel that is in the first image and that is mapped to the pixel in the face area in the third image can be determined. Assuming that a quantity of mapped pixels in the first image is m, where m is an integer greater than 1, the image processing apparatus 202 may obtain a motion field set W$_{in}$ = {T$_{in-1}$, T$_{in-2}$, ... , T$_{in-i}$, ... , T$_{in-m}$}. T$_{in-i}$ is a motion field of an i$^{th}$ pixel that is in the first image and that is mapped to a pixel in the face area in the third image. It may be determined that remaining pixels in the first image remain unchanged, and a motion field of the pixels is T$_{bg}$ = 0. In this way, a motion field set W$_{bg}$ = {T$_{bg-1}$, T$_{bg-2}$, ..., T$_{bg-j}$, ... , T$_{bg-n}$} can be obtained. T$_{bg-j}$ is a motion field of a j$^{th}$ pixel that is in the first image and that is not mapped to a pixel in the face area in the third image. It is assumed that a quantity of pixels that are not mapped is n, and n is an integer greater than 1.

Then, the image processing apparatus 202 may input the motion field (including W$_{in}$ and W$_{bg}$) of each pixel in the first image and the first image to a motion estimation network. The motion estimation network may output mask areas $\Omega_{in}$ and $\Omega_{bg}$ in the first image, and output a shading mask 0. $\Omega_{in}$ is a mask area formed by the m mapped pixels, and $\Omega_{bg}$ is a mask area formed by the n unmapped pixels. The motion estimation network may be, for example, a network constructed based on a neural network. The shading mask 0 is a mask generated for a pixel belonging to a shaded face area in a process of adjusting the orientation of the face in the first image. The shaded face area is a face area that is not presented in the first image. For example, if the first image presents only a left face of the user 1, and a right face of the user 1 is shaded by the left face due to a shooting angle, in a process of adjusting the orientation of the face of the user 1, the image processing apparatus 202 needs to restore content of the right face of the user 1, and the right face of the user 1 may be restored by using the shading mask 0. In this way, a motion field of all pixels in the first image is T = $\Omega_{in}W_{in}$ + $\Omega_{bg}W_{bg}$.

Finally, the image processing apparatus 202 may adjust the orientation of the face in the first image based on the motion field of all the pixels. For example, the image processing apparatus 202 may input the first image to an encoder, to obtain a feature vector F that corresponds to the first image and that is output by the encoder, so that the image processing apparatus 202 can deform the feature vector F based on the motion field T of all the pixel, for example, may deform the feature vector F by using a Grid Simple algorithm, to obtain a deformed feature vector F'. The feature vector F' is the third image in a vector form. In this way, the orientation of the face of the user 1 in the image can be adjusted to the preset direction.

In the first implementation example, only an inner area of the face of the user 1 may be modeled based on the 3DMM model. To be specific, information output by the 3DMM model does not include information about an area outside the face of the user 1, such as an ear and a hair. The area outside the face is an image area between a background area and the face area in the first image. In an actual application scenario, the area outside the face of the user 1, such as the ear and the hair, also moves with a head of the user 1. To be specific, when the orientation of the face in the first image is adjusted, corresponding motion estimation may also be performed on the area outside the face of the user 1, such as the ear and the hair. Based on this, this embodiment further provides another implementation example of adjusting the orientation of the face in the first image.

In a second implementation example, a plurality of pixels in the to-be-generated third image may be divided into three areas: the face area, the area outside the face, and the background area. The image processing apparatus 202 may obtain, through calculation in the foregoing manner of the first implementation example, a motion field W$_{in}$ of m pixels that are in the first image and that are mapped to pixels in the face area in the third image, and a motion field W$_{bg}$ of n$_1$ pixels that are in the first image and that are not mapped to pixels in the face area in the third image. In addition, the image processing apparatus 202 may further calculate, based on the facial posture feature of the face in the second image, a motion field $W_{out}$ of $n_2$ pixels that are in the first image and that are mapped to pixels in the area outside the face in the third image. An implementation process of determining the $n_2$ pixels in the first image may be similar to the foregoing implementation process of determining the m pixels. For details, refer to the foregoing related descriptions. Details are not described herein again.

When determining the motion field $W_{out}$, the image processing apparatus 202 may perform depth prediction on the first image to obtain a depth map corresponding to the first image, for example, may perform depth prediction on the first image based on a depth prediction network. The depth prediction network is for predicting a depth that is of a pixel in a two-dimensional image and that is in three-dimensional space. Each depth value (or referred to as a pixel value) in the obtained depth map represents a distance between a corresponding pixel in the first image and the lens of the shooting apparatus. In this way, three-dimensional coordinates of the pixel in the first image may be obtained. For example, the three-dimensional coordinates of the pixel may be shown in the following formula (4).

$$V(p_s) = \left( \frac{u_s - c_x}{f} * z_s, \frac{v_s - c_y}{f} * z_s, z_s \right) \quad \text{Formula (4)}$$

$p_s$ is a pixel of the $n_2$ pixels included in the first image. $V(p_s)$ are three-dimensional coordinates of the pixel. $z_s$ is a depth value corresponding to the pixel in the depth map. $\frac{u_s - c_x}{f} * z_s$, $\frac{v_s - c_y}{f} * z_s$, and $z_s$ are respectively a coordinate value of a first dimension, a coordinate value of a second dimension, and a coordinate value of a third dimension of the pixel. $f$ is a focal length. $u_s$ and $v_s$ are respectively a coordinate value of a first dimension and a coordinate value of a second dimension of two-dimensional coordinates of the pixel $p_s$ in the first image. $c_x$, $c_y$ respectively represent offsets of a coordinate origin of a pixel in the image relative to an origin of a coordinate system of the image in two directions x and y.

It is assumed that the $n_2$ pixels that are in the first image and that are mapped to the pixels in the area outside the face are rotated and translated with the m pixels in the first image, and perform rigid transformation. In this case, three-dimensional coordinates V' of each pixel in the $n_2$ pixels after the transformation may be shown in the following formula (5).

$$V' = R_1'(V - t_1) + t_2 \quad \text{Formula (5)}$$

$R_1'$ is a rotation angle corresponding to the orientation that is of the face and that is the preset direction. V is three-dimensional coordinates before rigid transformation is performed. $t_1$ is a translation offset extracted from the first image by the image processing apparatus 202. $t_2$ is a translation offset extracted from the second image by the image processing apparatus 202.

Then, the image processing apparatus 202 maps the three-dimensional coordinates of the pixel to an image plane on which the third image is located, to obtain a mapped pixel $q_t' = \Pi(V')$. Two-dimensional coordinates of the pixel qt may be calculated based on the foregoing formula (1). For a mapping process between the pixel in the third image and the pixel in the first image, refer to related descriptions in the foregoing embodiment. Details are not described herein again.

In this way, the $n_2$ pixels in the first image may be mapped to $n_2$ pixels on the image plane. In addition, the $n_2$ pixels mapped to the image plane may form a set $\{q_{t,i}'\}_{i=1}^{n_2}$. In this way, each of the $n_2$ pixels in the first image corresponds to one of the $n_2$ pixels on the image plane, and the image processing apparatus 202 may store a corre-spondence $C = \{(p_{s,i}, q_{t,i}')\}_{i=1}^{n_2}$.

Because two-dimensional coordinates of a part or all of the $n_2$ pixels to which the three-dimensional coordinates V' obtained through transformation are mapped on the image plane may not be integer values, that is, the $n_2$ pixels mapped to the image plane are not in one-to-one correspondence with the pixels in the third image (where coordinates do not match), the image processing apparatus 202 may determine, in a manner such as linear interpolation, a pixel that is in the third image and that corresponds to each of the $n_2$ pixels mapped to the image plane.

Specifically, for a pixel $p_t = (u_t, v_t)$ in the third image, the image processing apparatus 202 may select, from a

set $\{q'_{t,i}\}_{i=1}^{n_2}$, two pixels $q_t^{tl}$ and $q_t^{br}$ that are adjacent to the pixel $p_t$. The selected two adjacent pixels may be, for example, two pixels respectively located at an upper left location and a lower right location of the pixel $p_t$, or may be pixels respectively located at a lower left location and an upper right location of the pixel $p_t$. Coordinates of the pixel $q_t^{tl}$ are ($u_t^{tl}, v_t^{tl}$), and coordinates of the pixel $q_t^{br}$ are ($u_t^{br}, v_t^{br}$). There is mapping between the pixel $q_t^{tl}$ and a pixel $p_s^{tl} = (u_s^{tl}, v_s^{tl})$ in the first image, and there is a mapping between the pixel $q_t^{br}$ and a pixel $p_s^{br} = (u_s^{br}, v_s^{br})$ in the first image. Therefore, in the linear interpolation manner, the pixels $p_s^{tl}$, $p_s$, and $p_s^{br}$ in the first image can also satisfy a linear relationship when it is determined that pixel coordinates of the pixels $q_t^{tl}$, $p_t$, and $q_t^{br}$ satisfy a linear condition. In this way, the pixel $p_s$ in the first image can be mapped to the pixel $p_t = (u_t, v_t)$ in the third image. In this way, the image processing apparatus 202 may calculate, based on the following formula (6) to formula (10), a motion field $T_{out}$ from the pixel $p_s$ in the first image to the pixel $p_t = (u_t, v_t)$ in the third image.

$$T_{out} = (a_1 u_s^{tl} + a_2 u_s^{br}, b_1 v_s^{tl} + b_2 v_s^{br}) \qquad \text{Formula (6)}$$

$$a_1 = \frac{u_t - u_t^{tl}}{u_t^{br} - u_t^{tl}} \qquad \text{Formula (7)}$$

$$a_2 = \frac{u_t^{br} - u_t}{u_t^{br} - u_t^{tl}} \qquad \text{Formula (8)}$$

$$b_1 = \frac{v_t - v_t^{tl}}{v_t^{br} - v_t^{tl}} \qquad \text{Formula (9)}$$

$$b_2 = \frac{v_t^{br} - v_t}{v_t^{br} - v_t^{tl}} \qquad \text{Formula (10)}$$

In this way, the motion field $T_{out}$ of each pixel that is in the first image and that is mapped to the area outside the face in the third image may be obtained, to obtain the motion field set $W_{out} = \{T_{out-1}, T_{out-2}, \dots, T_{out-k}, \dots, T_{bg-n_2}\}$ of the $n_2$ pixels in the first image. $T_{out-k}$ is a motion field of a $k^{th}$ pixel in the $n_2$ pixels.

Then, the image processing apparatus 202 may input the motion field (including $W_{in}$, $W_{out}$, and $W_{bg}$) of each pixel in the first image and the first image to the motion estimation network. The motion estimation network may output mask areas $\Omega_{in}$, $\Omega_{out}$, and $\Omega_{bg}$ in the first image, and output a shading mask 0. $\Omega_{out}$ is a mask area formed by the $n_2$ mapped pixels. In this way, a motion field of all pixels in the first image is $T = \Omega_{in}W_{in} + \Omega_{out}W_{out} + \Omega_{bg}W_{bg}$.

Finally, the image processing apparatus 202 may adjust the orientation of the face in the first image based on the motion field of all the pixels. For example, the image processing apparatus 202 may input the first image to an encoder, to obtain a feature vector F that corresponds to the first image and that is output by the encoder, so that the image processing apparatus 202 can deform the feature vector F based on the motion field T of all the pixel, for example, may deform the feature vector F by using a GridSimple algorithm, to obtain a deformed feature vector $F'$. The feature vector $F'$ is the third image in a vector form. In this way, the orientation of the face (including an area inside the face and the area outside the face) of the user 1 in the image can be adjusted to the preset direction.

It should be noted that the foregoing implementation example of adjusting the face in the first image is merely used as an example for description. During actual application, the image processing apparatus 202 may alternatively adjust the orientation of the face in the first image in another manner. For example, in another embodiment, the image processing apparatus 202 may alternatively predict the motion field of each pixel in the first image by using a face structure in the first image and a face structure in the second image. For example, the image processing apparatus 202 may detect key points (for example, three-dimensional key points or two-dimensional key points) in face in the first image and the face in the second image, and estimate the motion field of each pixel in the first image based on the key points, to adjust the orientation of the face in the first image based on the predicted motion field. This is not limited in this embodiment.

After adjusting the orientation of the face in the first image to obtain the third image, the image processing apparatus 202 optimizes the face area in the third image by using the facial status feature, to obtain the target image.

In this embodiment, after the orientation of the face is adjusted based on the facial expression feature and/or the facial posture feature in the second image, in the face area in the obtained third image, features of a part of areas of the face may be greatly different from a feature of the actual face of the user 1. Therefore, the image processing apparatus 202 may further optimize a local area of the face in the third image by using the facial status feature in the second image, to improve a restoration effect of the image of the face in the third image.

In an implementation example, the image processing apparatus 202 may obtain an appearance feature in the first image. The appearance feature indicates an appearance of the at least one sub-area of the face whose orientation is to be adjusted in the first image. For example, the image processing apparatus 202 may input the first image into the key point detection model. The key point detection model performs inference on the first image, and outputs locations of a plurality of key points in the first image. The key points may be, for example, the foregoing key points such as the eyebrow, the eye, the nose, the mouth, the forehead, and the cheek, so that locations of one or more sub-areas in the first image can be obtained. Then, the image processing apparatus 202 may capture an image of the one or more corresponding sub-areas from the first image based on the location that is of the key point and that is output by the key point detection model, and input the captured image of the at least one sub-area into an appearance encoder. The appearance encoder outputs an appearance status corresponding to each sub-area. The appearance encoder is configured to encode an image, and output a vector that represents an appearance corresponding to the image.

After obtaining the appearance feature, the image processing apparatus 202 may optimize the face area in the third image based on the appearance feature and the facial status feature. For example, for each sub-area, the image processing apparatus 202 may splice an encoding vector corresponding to an appearance feature of the sub-area and an encoding vector corresponding to the facial status feature, and input a fusion encoding vector obtained through splicing into a fusion network for calculation, to obtain a local area encoding vector corresponding to the sub-area. The local area encoding vector may serve as an image code of the sub-area. The fusion network may be, for example, a CNN network, so that the CNN network may be used to perform a convolution operation on the vector obtained through splicing, to obtain the image code corresponding to the sub-area. Finally, the image processing apparatus 202 may replace an image coding vector of a corresponding sub-area in the third image with the local area encoding vector output by the fusion network for the sub-area, for example, replace an encoding vector of a mouth area in the third image with a local area encoding vector that corresponds to the mouth area and that is output by the fusion network, to obtain an intermediate image. Therefore, after the image processing apparatus 202 inputs the intermediate image and the foregoing shading mask 0 to a decoder, the decoder may decode the intermediate image based on the shading mask 0, and output the final target image. In the finally obtained target image, not only the orientation of the face of the user 1 is the preset direction (for example, the direction facing the shooting lens), and an expression/a posture of the face of the user 1 is consistent with an expression/a posture of the face in the second image, but also features of areas such as an eyebrow, an eye, a nose, and a mouth of the face of the user 1 can be consistent with features of the actual face of the user 1. In this way, a restoration effect of the face in the target image can be effectively improved.

The foregoing implementation process of optimizing the face area in the third image based on the facial status feature is merely used as an example for description. In another embodiment, the image processing apparatus 202 may alternatively optimize the face area based on the facial status feature in another manner. For example, the image processing apparatus 202 may adjust, based on the facial status feature and a value of a pixel in a part of areas of the face in the third image, a value of a pixel in another part of areas of the face in the third image. This is not limited.

In a further possible implementation, after generating the target image, the image processing apparatus 202 may further perform a preset operation.

For example, the image processing apparatus 202 may further present the target image. Specifically, the image processing apparatus 202 may provide the target image to the display apparatus 203, and present the target image to the user 2 by using the display apparatus 203, so that the user 2 views, on the device 200, the image of the face that is of the user 1 and that has been turned to the front.

Alternatively, after generating the target image, the image processing apparatus 202 may perform face recognition on the target image, to determine an object to which the face in the target image belongs. Specifically, an AI model for recognizing a face may be preconfigured in the image processing apparatus 202, so that after the orientation of the face is adjusted, the generated target image is input into the AI model. The AI model recognizes the face in the target image, and further determines, based on the recognized face, a user to which the face belongs, for example, determines that the face in the target image is the face of the user 1. In this way, after the orientation of the face is adjusted and a local area of the face is optimized, face recognition precision can be improved. In this embodiment, an operation performed by the image processing apparatus 202 based on the target image is not limited.

It should be noted that, in this embodiment, an example in which the facial feature simultaneously includes the facial status feature, the facial expression feature, and the facial posture feature is used for description. In another possible embodiment, the extracted facial feature may include only the facial status feature, or include only the facial feature status and the facial posture feature/the facial expression feature. This is not limited. To be specific, the image processing apparatus 202 may optimize the orientation of the face in the first image and the restoration effect of the face based only on the facial status feature. In this case, the orientation of the face in the first image may be adjusted based on a preset posture and/or expression feature. Alternatively, the image processing apparatus 202 may optimize the orientation in the first image, the restoration effect of the face, and the like based only on the facial status feature and the facial posture feature (or the facial expression feature). This is not limited herein.

In addition, in this embodiment, a specific implementation process in which the image processing apparatus 202 optimizes, for the video image of the user 1, the orientation of the face and the restoration effect of the face is mainly described. In the application scenario shown in FIG. 1a, the image processing apparatus 102 may also optimize, for a video image of the user 2, an orientation of the face and a restoration effect of the face. During actual application, the image processing apparatus 202 (and the image processing apparatus 102) may continuously optimize a display effect of the image of the face of the user, that is, perform an optimization process for long duration. Alternatively, when detecting that the orientation of the face in the image does not match the preset direction, the image processing apparatus 202 (and the image processing apparatus 102) may automatically perform a process of optimizing the orientation of the face in the image and the restoration effect of the face. Alternatively, the image processing apparatus 202 (and the image processing apparatus 102) may start or end an optimization process under control of the user. For example, when the user 2 taps an "optimize" button on the device 200, the image processing apparatus 202 may perform the process of optimizing the orientation of the face in the image and the restoration effect of the face, and display, to the user 2 by using the display apparatus 203, the target image obtained through optimization. When the user 2 taps an "end" button on the device 200, the image processing apparatus 202 may end a process of optimizing the display effect of the face in the image, and the like. In this embodiment, how to trigger the image processing apparatus 202 to perform the process of optimizing the orientation of the face in the image and the restoration effect of the face is not limited.

In a possible implementation, in an actual application scenario, when three or more users participate in a video conference, the image processing apparatus 202 may separately optimize, according to the procedure in the embodiment shown in FIG. 3, a display effect of a video image corresponding to each user that participates in the video conference, so that each user can achieve a face-to-face communication effect when the user 2 has the video conference with the plurality of users.

Alternatively, when three or more users participate in a video conference, the image processing apparatus 202 may optimize display effects of video images of only a part of the participants. For example, for a participating user that is speaking currently, the image processing apparatus 202 may optimize an orientation of a face in a video image including the user and a restoration effect of the face, and may not perform an optimization operation on a display effect of a video image corresponding to another participating user. Alternatively, for another part of users specified by the user 2, the image processing apparatus 202 may continuously optimize display effects of video images including faces of the user, and the like. This is not limited.

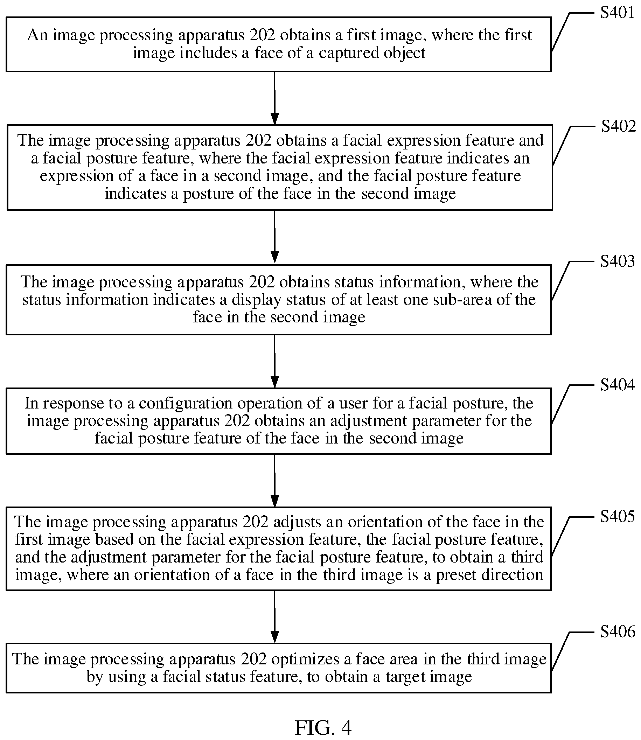

In the embodiment shown in FIG. 3, the posture of the face in the target image generated by the image processing apparatus 202 is usually consistent with the posture of the face in the second image. For example, when the posture of the face of the user 1 in the second image is "tilting a head to the left", the posture of the face in the generated target image may also be "tilting a head to the left". In another possible embodiment, the image processing apparatus 202 may further support setting of the posture of the face in the to-be-generated image. For example, the user may set the posture of the face in the target image to be consistent with the posture of the face in the second image. Alternatively, the user may set the posture of the face in the target image to always be a posture of "tilting a head to the right". Therefore, this application provides another image processing method. Refer to FIG. 4. The image processing method shown in FIG. 4 includes the following steps.

S401: An image processing apparatus 202 obtains a first image, where the first image includes a face whose orientation is to be adjusted.

S402: The image processing apparatus 202 obtains a facial expression feature and a facial posture feature, where the facial expression feature indicates an expression of a face in a second image, and the facial posture feature indicates a posture of the face in the second image.

S403: The image processing apparatus 202 obtains a facial status feature, where the facial status feature indicates a display status of at least one sub-area of the face in the second image.

For a specific implementation process of step S401 to step S403, refer to related descriptions of step S301 in the foregoing embodiment. Details are not described herein again.

S404: In response to a configuration operation of a user for a facial posture, the image processing apparatus 202 obtains an adjustment parameter for the facial posture feature of the face in the second image.

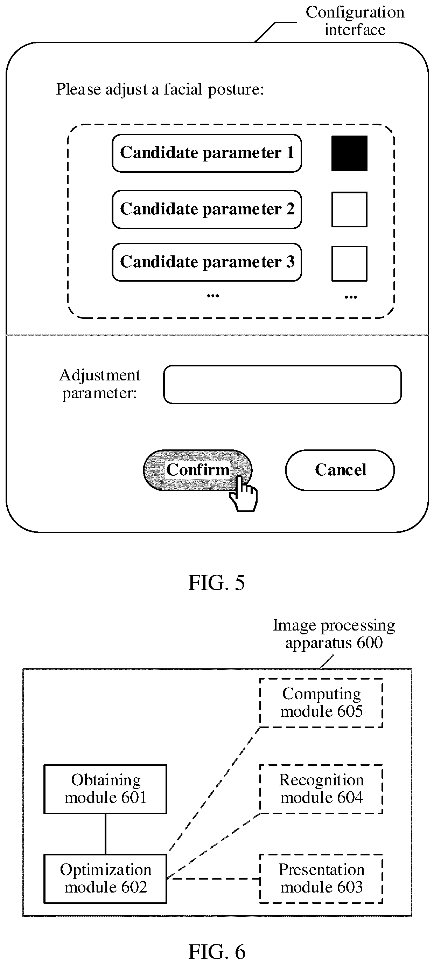

During specific implementation, the image processing apparatus 202 may output a configuration interface. The configuration interface may present a plurality of candidate parameters for adjusting the posture of the face, for example, a candidate parameter 1, a candidate parameter 2, and a candidate parameter 3 shown in FIG. 5. In this way, the user may perform selection on the plurality of candidate parameters. Correspondingly, the image processing apparatus 202 may determine, based on a selection operation performed by the user, the adjustment parameter for the posture of the face. Alternatively, an input box may be presented in the configuration interface shown in FIG. 5, so that the user may customize, in the input box, an adjustment parameter for the posture of the face. In this case, the image processing apparatus 202 may determine, based on an input of the user, the adjustment parameter for the posture of the face.

S405: The image processing apparatus 202 adjusts an orientation of the face in the first image based on the facial expression feature, the facial posture feature, and the adjustment parameter for the facial posture feature, to obtain a third image, where an orientation of a face in the third image is a preset direction.

During specific implementation, the image processing apparatus 202 may generate a new facial posture feature based on the adjustment parameter and the facial posture feature that is extracted from the second image. For example, it is assumed that the adjustment parameter is $R_{adj}$, and the facial posture feature extracted from the second image is $(R_2, t_2)$. $R_2$ is a rotation angle. $t_2$ is a translation offset. In this case, the image processing apparatus 202 may first adjust the rotation angle to a rotation angle $R'_2$ corresponding to the orientation that is of the face and that is the preset direction, and then the image processing apparatus 202 performs matrix multiplication on the rotation angle $R'_2$ and the adjustment parameter $R_{adj}$, to obtain $R_{adj} R'_2$ through calculation, so as to generate a new facial posture feature $(R_{adj} R'_2, t_2)$. In this way, the image processing apparatus 202 may adjust the orientation of the face in the first image based on the newly generated facial posture feature and the facial expression feature that is extracted from the second image. For a specific implementation process thereof, refer to related descriptions of step S304 in the foregoing embodiment. Details are not described herein again.

S406: The image processing apparatus 202 optimizes a face area in the third image by using a facial status feature, to obtain a target image.

For a specific implementation process of step S406, refer to related descriptions of step S305 in the foregoing embodiment. Details are not described herein again.

It should be noted that an execution sequence of step S401 to step S406 shown in FIG. 4 is not limited. For example, in another embodiment, another possible execution sequence may be used between step S401 and step S403. Alternatively, step S404 and step S405 may be performed first, and then step S403 is performed.

In a further possible implementation, after generating the target image, the image processing apparatus 202 may further perform a preset operation. For example, the image processing apparatus 202 may provide the target image to the display apparatus 203, and present the target image to the user 2 by using the display apparatus 203, so that the user 2 views, on the device 200, the image of the face that is of the user 1 and that has been turned to the front.

During actual application, in a process in which the user 2 has a video conference with the user 1, if the user 2 adjusts the posture of the face of the user 1 in the image, before the target image is generated, an image displayed by the display apparatus 203 on the device 200 may be a corresponding video image before posture adjustment. After the target image is generated, the display apparatus 203 may display the target image to the user 2, to ensure smoothness of the video image watched by the user 2 on the display apparatus 203. In this way, a video conference effect between the user 2 and the user 1 can further be improved.

In this embodiment, in a process of generating the target image, the image processing apparatus 202 optimizes, by using the status of the sub-area (such as an eye area or a mouth area) of the face in the second image, the face area in the third image obtained through orientation adjustment, so that a feature such as an eye or a mouth of the face in the finally generated target image is consistent with an actual feature of the face in the second image as much as possible. In this way, a restoration effect of the face in the image in which the orientation of the face has been adjusted can be improved. In addition, the posture of the face in the target image may be specified by a user. Therefore, flexibility of the posture of the face in the image can be improved, so that user experience can be improved.

It should be noted that another appropriate step combination that can be figured out by a person skilled in the art based on the content described above also falls within the protection scope of this application. In addition, a person skilled in the art should also appreciate that all embodiments described in this specification are preferred embodiments, and the related actions are not necessarily mandatory to this application.

The foregoing describes the image processing method provided in embodiments of this application with reference to FIG. 1a to FIG. 5. The following describes, with reference to the accompanying drawings, functions of an image processing apparatus provided in embodiments of this application and a computing device that implements the image processing apparatus.

FIG. 6 is a schematic diagram of a structure of an image processing apparatus. The image processing apparatus 600 includes:

an obtaining module 601, configured to obtain a first image, where the first image includes a face whose orientation is to be adjusted; and obtain a facial feature in a second image, where the facial feature indicates a display status of at least one sub-area of the face of the captured object; and

an optimization module 602, configured to optimize a display effect of the face in the first image based on the facial feature in the second image, to obtain a target image, where an orientation of a face in the target image is a preset direction, and a display status of at least one sub-area of the face in the target image matches the display status of the at least one sub-area of the face of the captured object.

It should be understood that the image processing apparatus 600 in this embodiment of this application of the present invention may be implemented by using a central processing unit (central processing unit, CPU), may be implemented by using an application-specific integrated circuit (application-specific integrated circuit, ASIC), or may be implemented by using a programmable logic device (programmable logic device, PLD). The PLD may be a complex programmable logical device (complex programmable logical device, CPLD), a field programmable gate array (field programmable gate array, FPGA), a generic array logic (generic array logic, GAL), a data processing unit (data processing unit, DPU), a system on chip (system on chip, SoC), or any combination thereof. Alternatively, when the image processing method shown in FIG. 3 or FIG. 4 may be implemented by using software, the image processing apparatus 600 and the modules of the image processing apparatus 600 may alternatively be software modules.

In a possible implementation, the facial feature includes a facial status feature. The facial status feature indicates the display status of the at least one sub-area of the face of the captured object. The facial feature further includes a facial expression feature or a facial posture feature. The facial expression feature indicates an expression of the face of the captured object. The facial posture feature indicates a posture of the face of the captured object.

In this case, the optimization module 602 is configured to:

adjust an orientation of the face in the first image based on the facial expression feature or the facial posture feature, to obtain a third image, where an orientation of a face in the third image is the preset direction, and an expression of the face in the third image matches the expression of the face of the captured object, or a posture of the face in the third image matches the posture of the face of the captured object; and

optimize a display effect of the face in the third image based on the facial status feature, to obtain the target image.

In a possible implementation, the obtaining module 601 is further configured to obtain an appearance feature. The appearance feature indicates an appearance of the at least one sub-area of the face whose orientation is to be adjusted and that is in the first image.

In this case, the optimization module is configured to:

optimize the display effect of the face in the third image based on the appearance feature and the facial status feature.

In a possible implementation, the obtaining module 601 is further configured to obtain, in response to a configuration operation of a user for a facial posture, an adjustment parameter for a posture of a face in the second image.

In this case, the optimization module 602 is configured to adjust the orientation of the face in the first image based on the adjustment parameter, the facial expression feature, and the facial posture feature.

In a possible implementation, the image processing apparatus 600 further includes:

a presentation module 603, configured to present the target image; or

a recognition module 604, configured to perform face recognition on the target image, to determine an object to which the face in the target image belongs.

In a possible implementation, the optimization module 602 is configured to:

splice an encoding vector corresponding to the appearance feature and an encoding vector corresponding to the facial status feature, to obtain a fusion encoding vector;

perform a convolution operation on the fusion encoding vector, to obtain a local area encoding vector;

replace an encoding vector corresponding to at least one sub-area of a face area in the third image with the local area encoding vector, to obtain an intermediate image; and

decode the intermediate image, to obtain the target image.

In a possible implementation, the image processing apparatus 600 further includes:
a calculation module 605, configured to obtain, through calculation based on the facial posture feature, a motion field of a target pixel that is in the first image and that corresponds to a pixel in an area outside the face in the third image, where the area outside the face is an image area between a background area and the face area in the third image.

In this case, the optimization module 602 is configured to:
adjust an orientation of an area outside the face in the first image based on the motion field of the target pixel in the first image, the facial expression feature, and the facial posture feature.

Because the image processing apparatus 600 shown in FIG. 6 corresponds to the method shown in FIG. 3 or FIG. 4, for a specific implementation of the image processing apparatus 600 shown in FIG. 6 and a technical effect of the image processing apparatus 600, refer to related descriptions in the foregoing embodiments. Details are not described herein again.

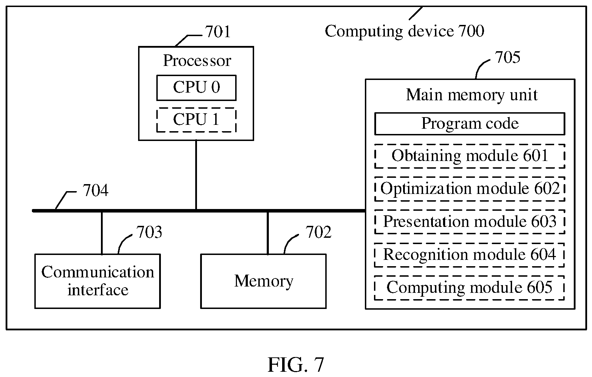

FIG. 7 is a schematic diagram of a computing device 700 according to this application. The computing device 700 may be, for example, the image processing apparatus 202 in the embodiment shown in FIG. 3 or FIG. 4.

As shown in FIG. 7, the computing device 700 includes a processor 701, a memory 702, and a communication interface 703. The processor 701, the memory 702, and the communication interface 703 communicate with each other by using a bus 704, or may communicate with each other in another manner such as wireless transmission. The memory 702 is configured to store instructions, and the processor 701 is configured to execute the instructions stored in the memory 702. Further, the computing device 700 may further include a main memory unit 705. The main memory unit 705 may further be connected to the processor 701, the storage medium 702, and the communication interface 703 by using the bus 704. The memory 702 stores program code, and the processor 701 may invoke the program code stored in the memory 702 to perform the following operations:

obtaining a first image, where the first image includes a face whose orientation is to be adjusted;
obtaining a facial feature in a second image, where the facial feature indicates a display status of at least one sub-area of the face of the captured object; and
optimizing a display effect of the face in the first image based on the facial feature in the second image, to obtain a target image, where an orientation of a face in the target image is a preset direction, and a display status of at least one sub-area of the face in the target image matches the display status of the at least one sub-area of the face of the captured object.

It should be understood that, in this embodiment of this application, the processor 701 may be a CPU, or the processor 701 may be another general-purpose processor, a digital signal processor (DSP), an application-specific integrated circuit (ASIC), a field programmable gate array (FPGA) or another programmable logic device, a discrete gate or a transistor logic device, a discrete device component, or the like. The general-purpose processor may be a microprocessor, or may be any conventional processor or the like.

The memory 702 may include a read-only memory and a random access memory, and provide instructions and data to the processor 701. The memory 702 may further include a nonvolatile random access memory. For example, the memory 702 may further store information about a device type.

The memory 702 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 703 is configured to communicate with another device connected to the computing device 700. The bus 704 may further include a power bus, a control bus, a status signal bus, and the like, in addition to a data bus. However, for clear description, various types of buses in the figure are denoted as the bus 704.

It should be understood that the computing device 700 according to this embodiment of this application may correspond to the image processing apparatus 600 in the embodiment of this application, and may correspond to the image processing apparatus 202 in the method shown in FIG. 3 or FIG. 4 in embodiments of this application. In addition, the foregoing and other operations and/or functions implemented by the computing device 700 are respectively for implementing corresponding procedures of the method in FIG. 3 or FIG. 4. For brevity, details are not described herein again.

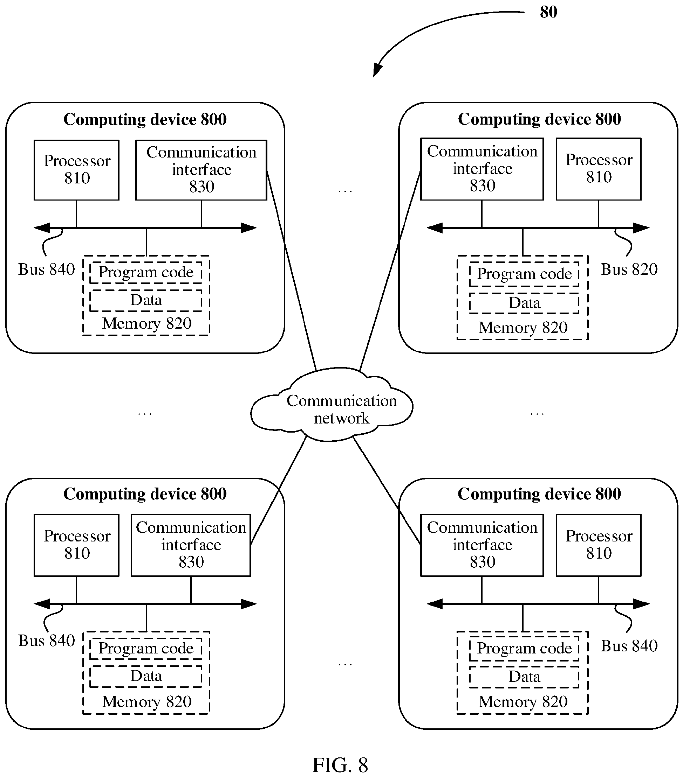

FIG. 8 is a schematic diagram of a structure of a computing device cluster. A computing device cluster 80 shown in FIG. 8 includes a plurality of computing devices. As shown in FIG. 8, the computing device cluster 800 includes a plurality of computing devices 800, and each computing device 800 includes a processor 810, a communication interface 830, and a bus 840. Further, the computing device 800 may further include a memory 820. The memory 820, the processor 810, and the communication interface 830 implement mutual communication connections by using the bus 840.

The processor 810 may be a CPU, a GPU, an ASIC, or one or more integrated circuits. Alternatively, the processor 810 may be an integrated circuit chip, and has a signal processing capability. In an implementation process, a part of functions of the image processing apparatus 202 may be implemented by using an integrated logic circuit of hardware in the processor 810 or instructions in a form of software. Alternatively, the processor 810 may be a DSP, an FPGA, a general-purpose processor, another programmable logic device, a discrete gate or a transistor logic device, or a discrete hardware assembly, and may implement or perform some methods, steps, and logical block diagrams disclosed in embodiments of this application. The general-purpose processor may be a microprocessor, or may be any conventional processor, or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 820. In each computing device 800, the processor 810 reads information in the memory 820, and may complete a part of functions of the image processing apparatus 202 in combination with hardware of the processor 810.

The memory 820 may include a ROM, a RAM, a static storage device, a dynamic storage device, a hard disk (for example, an SSD or an HDD), and the like. The memory 820 may store program code, for example, program code for implementing the image processing apparatus 202. For each computing device 800, when the program code stored in the memory 820 is executed by the processor 810, the processor 810 performs, based on the communication interface 830, a part of methods performed by the image processing apparatus 202. For example, a part of computing devices 800 may be configured to perform methods performed by the data obtaining module 601, and another part of computing devices 800 are configured to perform methods performed by the optimization module 602. The memory 820 may further store data, for example, intermediate data or result data generated by the processor 810 in an execution process, for example, the third image, the facial feature, and the intermediate image.

The communication interface 830 in each computing device 800 is configured to communicate with the outside, for example, interact with another computing device 800.

The bus 840 may be a peripheral component interconnect bus, an extended industry standard architecture bus, or the like. For ease of representation, the bus 840 in each computing device 800 in FIG. 8 is represented by using only one thick line, but this does not mean that there is only one bus or only one type of bus.

A communication path is established between the plurality of computing devices 800 by using a communication network, to implement a function of the image processing apparatus 202. Any computing device may be a computing device (for example, a server) in a cloud environment, a computing device in an edge environment, or a terminal device. In this case, the computing device in the cloud environment mainly performs operation steps that are of image data processing and optimization and that are implemented by the image processing apparatus 202 in FIG. 3 or FIG. 4.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk drive, a hard disk drive, or a magnetic tape), an optical medium (for example, a DVD), a semiconductor medium (for example, a solid-state drive), or the like. The computer-readable storage medium includes instructions, and the instructions instruct a computing device to perform the foregoing image processing method.

An embodiment of this application further provides a computer program product. The computer program product includes one or more computer instructions. When the computer instructions are loaded and executed on a computing device, all or a part of the procedures or functions according to embodiments of this application are generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any one of the foregoing image processing methods needs to be used, the computer program product may be downloaded and executed on the computing device.

All or a part of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1.  An image processing method, wherein the method comprises:

    obtaining a first image, wherein the first image comprises a face of a captured object;
    obtaining a facial feature in a second image, wherein the facial feature indicates a display status of at least one sub-area of the face of the captured object; and
    optimizing a display effect of the face in the first image based on the facial feature in the second image, to obtain a target image, wherein an orientation of a face in the target image is a preset direction, and a display status of at least one sub-area of the face in the target image matches the display status of the at least one sub-area of the face of the captured object.

2.  The method according to claim 1, wherein the facial feature comprises a facial status feature, the facial status feature indicates the display status of the at least one sub-area of the face of the captured object, the facial feature further comprises a facial expression feature or a facial posture feature, the facial expression feature indicates an expression of the face of the captured object, and the facial posture feature indicates a posture of the face of the captured object; and
    the optimizing a display effect of the face in the first image based on the facial feature in the second image comprises:

    adjusting an orientation of the face in the first image based on the facial expression feature or the facial posture feature, to obtain a third image, wherein an orientation of a face in the third image is the preset direction, and an expression of the face in the third image matches the expression of the face of the captured object, or a posture of the face in the third image matches the posture of the face of the captured object; and
    optimizing a display effect of the face in the third image based on the facial status feature, to obtain the target image.

3.  The method according to claim 1, wherein the method further comprises:

    obtaining an appearance feature, wherein the appearance feature indicates an appearance of the at least one sub-area of the face whose orientation is to be adjusted and that is of the captured object in the first image; and
    the optimizing a display effect of the face in the third image based on the facial status feature comprises:
    optimizing the display effect of the face in the third image based on the appearance feature and the facial status feature.

4.  The method according to claim 3, wherein the optimizing the display effect of the face in the third image based on the appearance feature and the facial status feature comprises:

    splicing an encoding vector corresponding to the appearance feature and an encoding vector corresponding to the facial status feature, to obtain a fusion encoding vector;

performing a convolution operation on the fusion encoding vector, to obtain a local area encoding vector;
replacing an encoding vector corresponding to at least one sub-area of a face area in the third image with the local area encoding vector, to obtain an intermediate image; and
decoding the intermediate image, to obtain the target image.

5. The method according to any one of claims 2 to 4, wherein the method further comprises:

obtaining, through calculation based on the facial posture feature, a motion field of a target pixel that is in the first image and that corresponds to a pixel in an area outside the face in the third image, wherein the area outside the face is an image area between a background area and the face area in the third image; and
the adjusting an orientation of the face in the first image based on the facial expression feature or the facial posture feature comprises:
adjusting an orientation of an area outside the face in the first image based on the motion field of the target pixel in the first image, the facial expression feature, and the facial posture feature.

6. The method according to any one of claims 2 to 5, wherein the method further comprises:

obtaining, in response to a configuration operation of a user for a facial posture, an adjustment parameter for a posture of a face in the second image; and
the adjusting an orientation of the face in the first image based on the facial expression feature or the facial posture feature comprises:
adjusting the orientation of the face in the first image based on the adjustment parameter, the facial expression feature, and the facial posture feature.

7. The method according to any one of claims 1 to 6, wherein the method further comprises:

presenting the target image; or
performing face recognition on the target image, to determine an object to which the face in the target image belongs.

8. An image processing apparatus, wherein the image processing apparatus comprises:

an obtaining module, configured to obtain a first image, wherein the first image comprises a face of a captured object; and obtain a facial feature in a second image, wherein the facial feature indicates a display status of at least one sub-area of the face of the captured object; and
an optimization module, configured to optimize a display effect of the face in the first image based on the facial feature in the second image, to obtain a target image, wherein an orientation of a face in the target image is a preset direction, and a display status of at least one sub-area of the face in the target image matches the display status of the at least one sub-area of the face of the captured object.

9. The image processing apparatus according to claim 8, wherein the facial feature comprises a facial status feature, the facial status feature indicates the display status of the at least one sub-area of the face of the captured object, the facial feature further comprises a facial expression feature or a facial posture feature, the facial expression feature indicates an expression of the face of the captured object, and the facial posture feature indicates a posture of the face of the captured object; and
the optimization module is configured to:

adjust an orientation of the face in the first image based on the facial expression feature or the facial posture feature, to obtain a third image, wherein an orientation of a face in the third image is the preset direction, and an expression of the face in the third image matches the expression of the face of the captured object, or a posture of the face in the third image matches the posture of the face of the captured object; and
optimize a display effect of the face in the third image based on the facial status feature, to obtain the target image.

10. The image processing apparatus according to claim 9, wherein

the obtaining module is further configured to obtain an appearance feature, wherein the appearance feature indicates an appearance of the at least one sub-area of the face whose orientation is to be adjusted and that is in the first image; and

the optimization module is configured to:
optimize the display effect of the face in the third image based on the appearance feature and the facial status feature.

11. The image processing apparatus according to claim 9 or 10, wherein the obtaining module is further configured to obtain, in response to a configuration operation of a user for a facial posture, an adjustment parameter for a posture of a face in the second image; and
the optimization module is configured to adjust the orientation of the face in the first image based on the adjustment parameter, the facial expression feature, and the facial posture feature.

12. The image processing apparatus according to any one of claims 8 to 11, wherein the image processing apparatus further comprises:

   a presentation module, configured to present the target image; or
   a recognition module, configured to perform face recognition on the target image, to determine an object to which the face in the target image belongs.

13. A computing device cluster, wherein the computing device cluster comprises at least one computing device, and the at least one computing device comprises a processor and a power supply circuit;

   the power supply circuit is configured to supply power to the processor; and
   the processor is configured to execute instructions, to enable the computing device cluster to perform steps of the method according to any one of claims 1 to 7.

14. A computer-readable storage medium, comprising instructions, wherein when the instructions are run on a computing device, the computing device is enabled to perform steps of the method according to any one of claims 1 to 7.

FIG. 1a

Device 300

Image 1
and image 2 →

Image processing
apparatus 301

Target image ↓

Target
image ←

Display apparatus 302

User 3

FIG. 1b

Image processing
apparatus 401

Image 1
and image 2

Image 1
and facial
feature

Target
image

Image 1 and
image 2 →

Terminal device 402

Target image ←

User 4

FIG. 1c

Rotate 45 degrees to the left
to adjust an orientation of a
face

FIG. 2

S301

An image processing apparatus 202 obtains a first image, where the first
image includes a face of a captured object

S302

The image processing apparatus 202 obtains a facial feature in a second
image, where the facial feature indicates a display status of at least one sub-
area of the face of the captured object

S303

The image processing apparatus 202 optimizes a display effect of the face
in the first image based on the facial feature in the second image, to obtain a
target image, where an orientation of a face in the target image is a preset
direction, and a display status of at least one sub-area of the face in the
target image matches the display status of the at least one sub-area of the
face of the captured object

FIG. 3

An image processing apparatus 202 obtains a first image, where the first image includes a face of a captured object ⎯ S401

The image processing apparatus 202 obtains a facial expression feature and a facial posture feature, where the facial expression feature indicates an expression of a face in a second image, and the facial posture feature indicates a posture of the face in the second image ⎯ S402

The image processing apparatus 202 obtains status information, where the status information indicates a display status of at least one sub-area of the face in the second image ⎯ S403

In response to a configuration operation of a user for a facial posture, the image processing apparatus 202 obtains an adjustment parameter for the facial posture feature of the face in the second image ⎯ S404

The image processing apparatus 202 adjusts an orientation of the face in the first image based on the facial expression feature, the facial posture feature, and the adjustment parameter for the facial posture feature, to obtain a third image, where an orientation of a face in the third image is a preset direction ⎯ S405

The image processing apparatus 202 optimizes a face area in the third image by using a facial status feature, to obtain a target image ⎯ S406

FIG. 4

Configuration
interface

Please adjust a facial posture:

Candidate parameter 1 ■

Candidate parameter 2 □

Candidate parameter 3 □

... ...

Adjustment
parameter:

Confirm    Cancel

FIG. 5

Image processing
apparatus 600

Computing
module 605

Obtaining
module 601

Recognition
module 604

Optimization
module 602

Presentation
module 603

FIG. 6

FIG. 7

FIG. 8

## INTERNATIONAL SEARCH REPORT

| International application No. |
| --- |
| **PCT/CN2023/101582** |

**A. CLASSIFICATION OF SUBJECT MATTER**

G06T 11/60(2006.01)i

According to International Patent Classification (IPC) or to both national classification and IPC

**B. FIELDS SEARCHED**

Minimum documentation searched (classification system followed by classification symbols)

IPC:G06T,G06F

Documentation searched other than minimum documentation to the extent that such documents are included in the fields searched

Electronic data base consulted during the international search (name of data base and, where practicable, search terms used)

CNTXT, DWPI, ENTXT, ENTXTC, CNKI: 图像, 处理, 面部, 表情, 姿态, 方向, 编码, 向量, 卷积, 像素点, image, processing, facial, expression, gesture, posture, pose, direction, orientation, coding, vector, convolution, pixel

**C. DOCUMENTS CONSIDERED TO BE RELEVANT**

| Category* | Citation of document, with indication, where appropriate, of the relevant passages | Relevant to claim No. |
| --- | --- | --- |
| X | CN 112116684 A (INSTITUTE OF INFORMATION ENGINEERING, CHINESE ACADEMY OF SCIENCES et al.) 22 December 2020 (2020-12-22) description, paragraphs 0035-0206 | 1-14 |
| A | CN 111797249 A (HUAWEI TECHNOLOGIES CO., LTD.) 20 October 2020 (2020-10-20) entire document | 1-14 |
| A | CN 113473015 A (HONOR TERMINAL CO., LTD.) 01 October 2021 (2021-10-01) entire document | 1-14 |
| A | JP 2012174197 A (SO NET ENTERTAINMENT CORP.) 10 September 2012 (2012-09-10) entire document | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 September 2023** | **07 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
| --- | --- | --- |
| Information on patent family members | | **PCT/CN2023/101582** |

| Patent document cited in search report | | | Publication date (day/month/year) | Patent family member(s) | | | Publication date (day/month/year) |
| --- | --- | --- | --- | --- | --- | --- | --- |
| CN | 112116684 | A | 22 December 2020 | None | | | |
| CN | 111797249 | A | 20 October 2020 | WO | 2020207413 | A1 | 15 October 2020 |
| | | | | US | 2022021742 | A1 | 20 January 2022 |
| | | | | EP | 3944099 | A1 | 26 January 2022 |
| | | | | EP | 3944099 | A4 | 18 May 2022 |
| | | | | IN | 202117047696 | A | 18 February 2022 |
| | | | | KR | 20210145815 | A | 02 December 2021 |
| CN | 113473015 | A | 01 October 2021 | CN | 113473015 | B | 08 March 2022 |
| JP | 2012174197 | A | 10 September 2012 | JP | 5291735 | B2 | 18 September 2013 |
| | | | | US | 2012218270 | A1 | 30 August 2012 |
| | | | | US | 8976182 | B2 | 10 March 2015 |

Form PCT/ISA/210 (patent family annex) (July 2022)

**REFERENCES CITED IN THE DESCRIPTION**

**Patent documents cited in the description**

- CN 202211521659